# EUROPEAN PATENT APPLICATION

(11) **EP 4 258 502 A2**
(43) Date of publication of application: **11.10.2023**
(21) Application number: 23166522.5
(22) Date of filing: 04.04.2023
(51) Int. Cl.: H02J 3/18, G05F 1/70

(54) **POWER FACTOR CORRECTION SYSTEM**

(30) Priority: 06.04.2022 OM 1682022
(71) Applicant: Energy Facilities UK Limited, Hoddesdon, Hertfordshire EN11 0EX (GB)
(72) Inventor: BOURN, Steven, Essex (GB); FULLER, Graham, Essex (GB)
(74) Representative: J A Kemp LLP

(57) **Abstract**

Disclosed herein is a power factor correction system for local power factor correction of one or more multi-phase inductive loads, the power factor correction system comprising: a master capacitive unit, the master capacitive unit comprising at least one capacitive module, wherein each capacitive module comprises: a contactor; and a multi-phase capacitive load arranged to connect to the contactor such that, in use, the multi-phase capacitive load can be connected in parallel with a multi-phase inductive load; and one or more slave capacitive units, each slave capacitive unit comprising at least one capacitive module, wherein each capacitive module comprises: a contactor; and a multi-phase capacitive load arranged to connect to the contactor such that, in use, the multi-phase capacitive load can be connected in parallel with a multi-phase inductive load; wherein the master capacitive unit further comprises a central control unit configured to control each of the contactors of all of the capacitive modules so as to control one or more multi-phase capacitive loads applied to one or more the multi-phase

## Description

### Field

The present invention relates to a local power factor correction system that comprises a plurality of capacitive units.

### Background

Inductive loads are used widely in residential, commercial and industrial settings, for example in the form of electric motors and transformers used in compressor and refrigeration systems, ventilation and air conditioning, motor drives of industrial machines and others. The cost and environmental impact of operating such inductive loads is directly correlated to their power consumption. It is thus desirable to improve the efficiency of power transmission and consumption of inductive loads.

The power factor of an AC electric power system is generally considered a measure of efficiency of the system. The power factor is defined as the ratio of real or active power used by the load and apparent power transmitted to the load. An AC electric power system comprising an overall inductive load typically has apparent power greater than real power. This is due to energy that is stored in the inductive load, in the form of a magnetic field required to operate the inductive load, and returned to the source. The power factor of such a system is less than 1 or unity. The "wasted" or useless power lost to energising the magnetic field of the inductive load is also referred to as reactive power. The AC current waveform in such an inductive load is out of phase, and lags, the AC voltage waveform. The reactive power does not contribute to the useful power output of the inductive load, but adds to the power transmitted to the inductive load and thus increases the environmental impact and cost of operating the inductive load.

Power factor correction units may be used to improve the power factor and reduce the reactive power of an AC electric power system. Such power factor correction units compensate for the lagging current induced by the inductive load by creating a leading current, for example by using capacitive loads. A capacitive load gives rise to a negative reactive power, effectively cancelling the positive reactive power of an inductive load. However, conventional power factor correction units and systems do not provide the required flexibility and customizability to achieve optimized power factor correction over a range of inductive load conditions, and are not easy and convenient to operate. In practice, inductive loads may switch off, fail or break down, change in inductivity or be replaced by other loads. Furthermore, the configuration of inductive loads varies widely among existing electric power systems, such that an off-the-shelf unit may not optimally correct the power factor. Maintenance and monitoring of multiple capacitive units requires an operator to separately access each capacitive unit, making such tasks complicated and timeconsuming.

There is a general need to improve on known power factor correction systems.

### Summary of the invention

Aspects of the invention are set out in the appended independent claims. Optional aspects are set out in the dependent claims.

### List of figures

The invention is described below, by way of example only, with reference to the drawings, in which:
Figure 1 is a schematic diagram showing an example of how a capacitive unit may be connected to an AC electric power system;
Figure 2 schematically shows a capacitive unit with three capacitive modules;
Figure 3 schematically shows a power factor correction system according to an embodiment; and
Figure 4 schematically shows a power factor correction system according to an embodiment.

The following description is merely exemplary in nature and is not intended to limit the scope of the present invention, which is defined in the claims. It should be understood that throughout the drawings, corresponding reference numerals indicate like or corresponding parts and features.

### Description

Embodiments of the present invention may be used for power factor correction of an inductive load in an AC electric power system, in which electric power is supplied to the inductive load by an AC electric power source.

The International patent application PCT/GB2019/052374, that was published as WO 2020/039207 A1, discloses a power factor correction system that is used in a multi-phase AC electric power system. The multi-phase AC electric power system comprises a three-phase inductive load and a three-phase AC electric power supply.

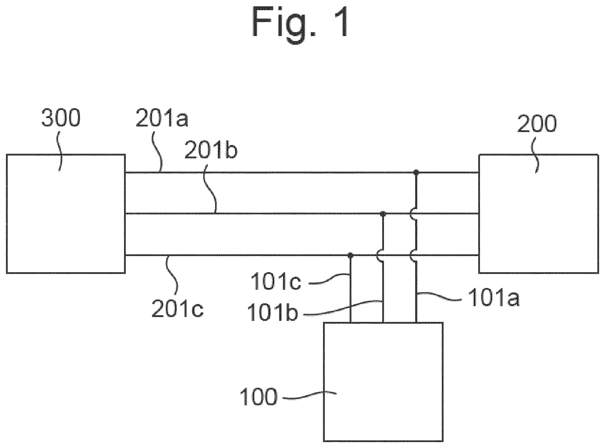

Figure 1 shows the AC electric power system that is disclosed in PCT/GB2019/052374. The AC electric power system comprises a power supply 300 and an inductive load 200. The inductive load 200 is connected to the power supply 300 via phase cables 201a, b, c. Specifically, Figure 1 shows a three-phase AC electric power system, comprising a three-phase AC electric power supply 300 and a three-phase inductive load 200 connected thereto via three phase cables 201a, b, c. A capacitive unit 100, specifically shown as a three-phase capacitive unit 100 in Figure 1, is connectable in parallel to the inductive load 200. This ensures that the capacitive unit 100 can be easily installed in existing electric power systems without the need to disconnect the inductive load 200 from the power supply 300. The capacitive unit 100 is connected in parallel to the inductive load 200 via connection lines 101a, b, c.

The capacitive unit 100 may be located in a housing, such as a glass reinforced plastic (GRP) housing. All components of the capacitive unit 100 may be enclosed by the housing. The capacitive unit 100 may be a stand-alone unit. The capacitive unit 100 thus can be delivered and installed as a single unit.

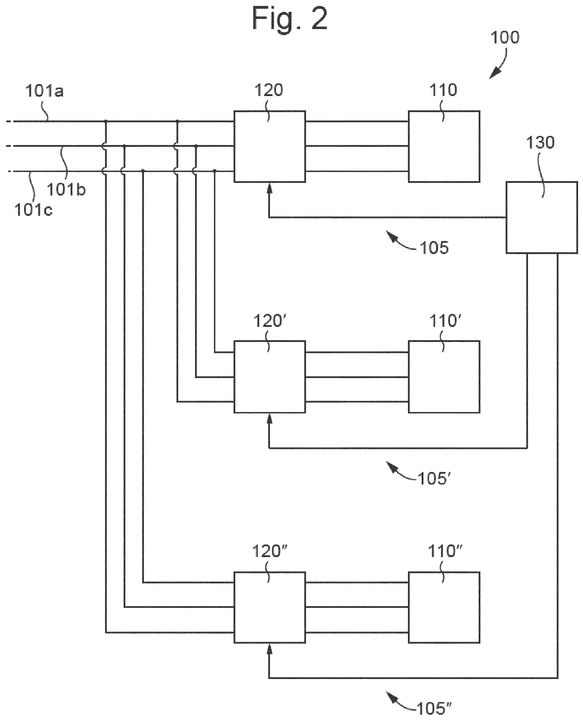

Figure 2 shows an implementation of the capacitive unit 100 comprising three capacitive modules 105, 105', 105". The three capacitive modules 105, 105', 105" are connected in parallel. Each of the capacitive modules 105, 105', 105" comprises a capacitive load 110, 110', 110" and a contactor 120, 120', 120". The capacitive unit 100 further comprises a central control unit 130. The central control unit 130 controls the contactors 120, 120', 120", so as to open and close the contactors 120, 120', 120".

The contactor 120 is for switching capacitive loads, such as capacitive load 110. The contactor 120 may comprise two switching terminals. A holding voltage, or control voltage, may be applied to the switching terminals. The contactor 120 may be closed, so as to connect the capacitive load 110 to the inductive load 200, when the holding voltage applied to the switching terminals of the contactor 120 exceeds a pre-set minimum voltage. The contactor 120 may be open, so as to disconnect the capacitive load 110 from the inductive load 200, when the holding voltage applied to the switching terminals is below the pre-set minimum voltage. The contactor 120 may be of a mechanical type that achieves minimal arcing on the coil contacts. For example, the contactor 120 may be an AF30-30-30 by ABB @.

Each of the capacitive modules 105, 105', 105" may be identical. Alternatively, different capacitive modules 105, 105', 105", for example including capacitive loads 110, 110', 110" with different capacitances, may be used. Each of the capacitive modules 105, 105', 105" may be chosen from a set of standard capacitive modules. It may also be possible to customize each of the set of standard capacitive modules. This allows the capacitive unit 100 to be highly customizable to match the inductive load 200. Using three capacitive modules 105, 105', 105" ensures a high flexibility of the capacitive unit 100, while maintaining a simple construction.

As described in PCT/GB2019/052374, the entire contents of which are incorporated herein by reference, the capacitive unit 100 may comprise many more components.

A problem with the power factor correction system disclosed in PCT/GB2019/052374 is that it is difficult for the implementation power factor correction system to be scaled. It is desirable for it to be possible to increase the amount of reactive power that a power factor correction system may apply. This is because the reactive power requirement to correctly compensate an inductive load may increase. For example, an inductive load may change, an inductive load may be replaced with a larger inductive load, or an arrangement of inductive loads may be changed.

In particular, the capacitive unit 100 is made and delivered with three capacitive modules 105, 105', 105" in a housing. The housing may be unable to accommodate more capacitive modules. In order to increase the number of capacitive modules in the capacitive unit 100, it may be necessary to change at least the housing and this is complicated and expensive process.

If more than one of the capacitive units 100 disclosed in PCT/GB2019/052374 is used in the same installation, then each capacitive unit 100 will have its own central control unit 130. The use of more than one central control unit 130 is technically complicated due to the required communications between the different central control units 130 for synchronising the switching of the contactors in the separate capacitive units. The use of more than one central control unit 130 is also expensive.

Another problem with the power factor correction system disclosed in PCT/GB2019/052374 is that the power factor correction system cannot operate with a plurality of separate inductive loads 200.

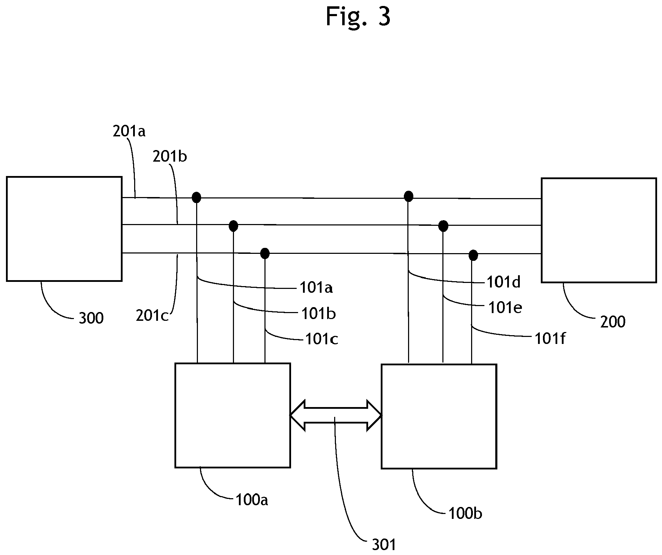

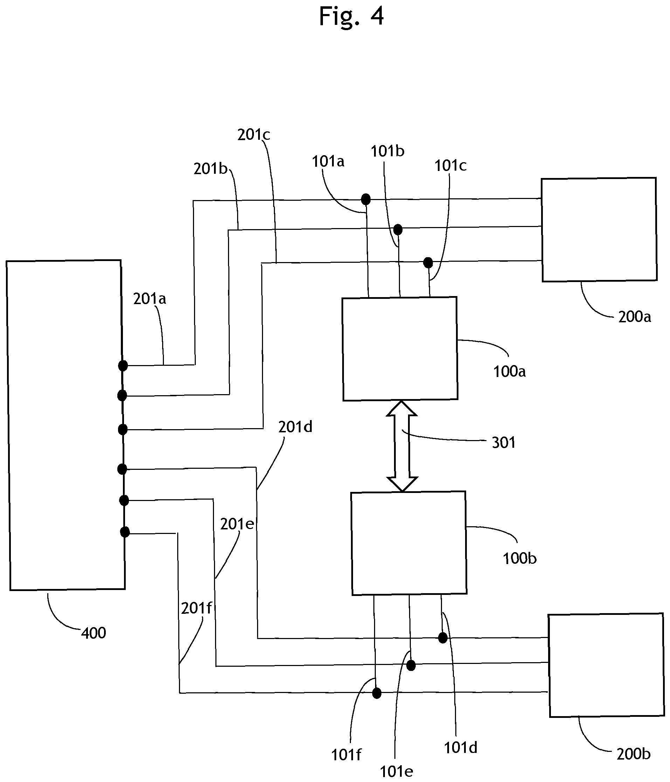

Embodiments provide a power factor correction system that solves at least some of the problems that may be identified with the power factor correction system disclosed in PCT/GB2019/052374. Embodiments are described below with reference to Figures 3 and 4.

Embodiments provide a first capacitive unit 100a and a second capacitive unit 100b. The first capacitive unit 100a and second capacitive unit 100b have different designs. The first capacitive unit 100a is a master unit and the second capacitive unit 100b is a slave unit. The first capacitive unit 100a is arranged to control the second capacitive unit 100b.

The first capacitive unit 100a may be substantially as shown in Figure 2 and disclosed in PCT/GB2019/052374. Accordingly, the first capacitive unit 100a may comprise, for example, three capacitive modules 105, 105', 105". The three capacitive modules 105, 105', 105" may be connected in parallel. Each of the capacitive modules 105, 105', 105" may comprise a capacitive load 110, 110', 110" and a contactor 120, 120', 120". The first capacitive unit 100a may further comprise a central control unit 130. The central control unit 130 may control the contactors 120, 120', 120", so as to open and close the contactors 120, 120', 120". The central control unit 130 of the first capacitive unit 100a may directly control the capacitive modules in the second capacitive unit 100b. The first capacitive unit 100a may comprise a communications module, such as a modem, and/or communications interface for sending control signals to the second capacitive unit 100b. There may be a communications channel 301 for communicating data between the first capacitive unit 100a and the second capacitive unit 100b. The communications channel 301 may be a wired communications channel and/or a wireless communications channel. The communications channel 301 may use any of a number of well known communication techniques.

The second capacitive unit 100b may similarly comprise, for example, three capacitive modules 105, 105', 105". The three capacitive modules 105, 105', 105" may be connected in parallel. Each of the capacitive modules 105, 105', 105" may comprise a capacitive load 110, 110', 110" and a contactor 120, 120', 120". The second capacitive unit 100b differs from the first capacitive unit 100a by not comprising a central control unit. The second capacitive unit 100b comprises a communications module, such as a modem, and/or communications interface for receiving control instructions from the first capacitive unit 100a.

In embodiments the central control unit 130 of the first capacitive unit 100a may directly control the capacitive modules in the second capacitive unit 100b. An advantage of direct control is that it is easy to control the timing of the switching of each contactor 120, 120', 120". The control instructions, and any other data, may be transmitted between the first capacitive unit 100a and the second capacitive unit 100b substantially instantaneously. The central control unit 130 may therefore send switching instructions directly to each contactor 120, 120', 120" of both the first capacitive unit 100a and also the second capacitive unit 100b without there being a substantial time lag between the receipt of the instructions by each contactor 120, 120', 120".

The above-described control by a single central control unit 130 is an important difference between the first capacitive unit 100a and second capacitive unit 100b according to embodiments and the capacitive unit 100 disclosed in PCT/GB2019/052374. All of the capacitive units 100 disclosed in PCT/GB2019/052374 comprise a central control unit 130. In PCT/GB2019/052374, it is not possible for a central control unit 130 to directly control the capacitive modules in a different capacitive unit 100. In PCT/GB2019/052374 it may be possible for the central control units 130 of different capacitive units 100 to communicate with each other. However, this communication process is both more complicated and slower than that of embodiments. A system comprising a plurality of the capacitive units 100 as disclosed in PCT/GB2019/052374 is also expensive because each capacitive unit 100 comprises a central control unit 130.

Figure 3 shows an implementation of a power factor correction system comprising a first capacitive unit 100a and second capacitive unit 100b according to an embodiment.

Figure 3, shows an AC electric power system that comprises a power supply 300 and an inductive load 200. The inductive load 200 is connected to the power supply 300 via phase cables 201a, b, c. Specifically, Figure 3 shows a three-phase AC electric power system, comprising a three-phase AC electric power supply 300 and a three-phase inductive load 200 connected thereto via three phase cables 201a, b, c.

The first capacitive unit 100a, that is a three-phase capacitive unit, is connectable in parallel to the inductive load 200. This ensures that the first capacitive unit 100a can be easily installed in existing electric power systems without the need to disconnect the inductive load 200 from the power supply 300. The first capacitive unit 100a is connected in parallel to the inductive load 200 via connection lines 101a, b, c. The first capacitive unit 100a comprises capacitive modules that apply a power factor correction to the inductive load 200, as described for the capacitive unit 100 disclosed in PCT/GB2019/052374.

The second capacitive unit 100b, that is a three-phase capacitive unit, is also connectable in parallel to the inductive load 200. This ensures that the second capacitive unit 100b can be easily installed in existing electric power systems without the need to disconnect the inductive load 200 from the power supply 300. The second capacitive unit 100b is connected in parallel to the inductive load 200 via connection lines 101d, e, f. The first capacitive unit 100a and second capacitive unit 100b are therefore connected to the phase cables 201a, b, c via separate sets of connection lines. The second capacitive unit 100b comprises capacitive modules that also apply a power factor correction to the inductive load 200. The applied power factor correction to the inductive load 200 may therefore be generated from capacitive modules in both the first capacitive unit 100a and the second capacitive unit 100b.

There is a communications channel 301 for transmitting data between the first capacitive unit 100a and the second capacitive unit 100b. The transmitted data may include control instructions, that have been generated by the central control unit 130 of the first capacitive unit 100a, for switching the contactors 120, 120', 120" in the second capacitive unit 100b. The transmitted data may include current and/or voltage measurements transmitted from the second capacitive unit 100b to the first capacitive unit 100a. The transmitted data may include any other data for the operation of the power factor system. The communications channel 301 may be a wired communications channel and/or a wireless communications channel. The communications channel 301 may use any of a number of well known communication techniques.

The power factor correction system shown in Figure 3 may advantageously be implemented and operated in number of different ways. The second capacitive unit 100b upgrades the capability of a power factor correction system with only a single capacitive unit. In particular, the second capacitive unit 100b allows the power factor correction system to continue to operate effectively when there has been a change in the inductive load 200, allows correct operation after failure of any of the capacitive modules in the first capacitive unit 100a, and/or provides redundancy in the event of failure of any of the capacitive modules in the first capacitive unit 100a. The initial installation of the power factor correction system may have comprised only the first capacitive unit 100a but not the second capacitive unit 100b. The second capacitive unit 100b may have been installed later in a retrofitting process. Alternatively, the first capacitive unit 100a and second capacitive unit 100b may have been installed at the same time as each other.

Figure 4 shows an implementation of a power factor correction system comprising a first capacitive unit 100a and second capacitive unit 100b according to another embodiment.

Figure 4, shows an AC electric power system that comprises a single power supply 400, a first inductive load 200a, and a second inductive load 200b. The power supply 400 is a single power source for a plurality of separate inductive loads 200a, 200b. For example, a cooling system may comprise two motors with each motor driving a different compressor of the cooling system. In this situation, each motor is a separate inductive load 200a, 200b. Power to both of the motors may be supplied by the same power supply 400 via separate sets of phase cables.

The first inductive load 200a is connected to the power supply 400 via phase cables 201a, b, c. The first inductive load 200a is a three-phase inductive load 200. The power supply 400 provides a three-phase AC electric power supply to the first inductive load 200a via the three phase cables 201a, b, c.

The second inductive load 200b is connected to the power supply 400 via phase cables 201d, e, f. The second inductive load 200b is a three-phase inductive load 200. The power supply 400 provides a three-phase AC electric power supply to the second inductive load 200b via the three phase cables 201d, e, f.

The first capacitive unit 100a, that is a three-phase capacitive unit, is connectable in parallel to the first inductive load 200a. The first capacitive unit 100a is connected in parallel to the first inductive load 200a via connection lines 101a, b, c. The first capacitive unit 100a comprises capacitive modules that apply a power factor correction to the inductive load 200a, as described for the capacitive unit 100 disclosed in PCT/GB2019/052374.

The second capacitive unit 100b, that is a three-phase capacitive unit, is connectable in parallel to the second inductive load 200b. The second capacitive unit 100b is connected in parallel to the second inductive load 200b via connection lines 101d, e, f. The second capacitive unit 100b comprises capacitive modules that apply a power factor correction to the inductive load 200b.

There is a communications channel 301 for transmitting data between the first capacitive unit 100a and the second capacitive unit 100b. The transmitted data may include control instructions, that have been generated by the central control unit 130 of the first capacitive unit 100a, for switching the contactors 120, 120', 120" in the second capacitive unit 100b. The transmitted data may include current and/or voltage measurements transmitted from the second capacitive unit 100b to the first capacitive unit 100a. The transmitted data may include any other data for the operation of the power factor system. The communications channel 301 may be a wired communications channel and/or a wireless communications channel. The communications channel 301 may use any of a number of well known communication techniques.

Advantageously, the present embodiment provides a power factor correction system that may be easily implemented across a plurality of inductive loads. The entire power factor system is easily controlled by only the central control unit 130 of the first capacitive unit. A particularly advantageous application of the present embodiment is when two inductive loads are used to power one cooling system. In such an arrangement, one of the inductive loads may be a lead inductive load and the other a trailing inductive load. The present embodiment allows a single power factor correction system to provide, and easily control, capacitive units for applying reactive power to both the lead inductive load and the trailing inductive load.

Embodiments include a number of modification and variations to the above described techniques.

Embodiments are not restricted to the first capacitive unit 100a controlling only a single second capacitive unit 100b. Embodiments include the first capacitive unit 100a being a master capacitive unit that controls a plurality of slave capacitive units. Each slave capacitive unit may be a separate implementation of the above-described second capacitive unit 100b. For example, the master capacitive unit, i.e. the first capacitive unit 100a, may control three, four, or more slave capacitive units. The slave capacitive units may directly communicate with the master capacitive unit across separate direct communication channels between the master capacitive unit and each slave capacitive unit. Alternatively, the communication path between a slave capacitive unit and the master capacitive unit may be via one or more of the other slave capacitive units (i.e. multi-hop communication may be used).

The embodiment shown in Figure 3 may be adapted so that one or more further slave capacitive units are installed for the inductive load 200. Advantageously, this further upgrades the capability of the power factor correction system.

The embodiment shown in Figure 4 may be adapted so that one or more further slave capacitive units are installed for each of the inductive loads 200a and 200b. Each inductive load 200a, 200b is then further provided with the advantages of there being two or more separate capacitive units for the inductive load.

Embodiments also include the power supply 400 of Figure 4 supplying power to more than two inductive loads. Each inductive load may have one, two or more capacitive units arranged to apply a power factor correction to it.

Embodiments also include the power factor correction system operating on two or more inductive loads with each inductive load receiving power from a separate power supply.

In embodiments, each capacitive unit may have its own housing that is separate from the housing of the other capacitive units. This aids the retrofitting of further capacitive units to an existing power factor correction system. The use of separate modules also aids the replacement of a capacitive unit. Alternatively, a housing may comprise more than one capacitive unit.

The foregoing description of the preferred embodiments has been provided for the purposes of illustration and description. Individual elements or features of a particular embodiment are generally not limited to that particular embodiment, but where applicable may be interchangeably used in combination with other features to define another embodiment, even if not specifically shown or described. The description is therefore not intended to limit the scope of the present invention, which is defined in the claims.

## Claims

1. A power factor correction system for local power factor correction of one or more multi-phase inductive loads, the power factor correction system comprising:
a master capacitive unit, the master capacitive unit comprising at least one capacitive module, wherein each capacitive module comprises: a contactor; and a multi-phase capacitive load arranged to connect to the contactor such that, in use, the multi-phase capacitive load can be connected in parallel with a multi-phase inductive load; and
one or more slave capacitive units, each slave capacitive unit comprising at least one capacitive module, wherein each capacitive module comprises: a contactor; and a multi-phase capacitive load arranged to connect to the contactor such that, in use, the multi-phase capacitive load can be connected in parallel with a multi-phase inductive load;
wherein the master capacitive unit further comprises a central control unit configured to control each contactor of all of the capacitive modules so as to control one or more multi-phase capacitive loads applied to one or more the multi-phase inductive loads by the master capacitive unit and the one or more slave capacitive units.

2. The power factor correction system according to claim 1, wherein none of the slave capacitive units comprises a central control unit.

3. The power factor correction system according to claim 1 or 2, wherein the master capacitive unit is configured to be connected to an inductive load via a set of connection lines; and
each slave capacitive unit is configured to be connected to an inductive load via a set of connection lines that is separate from the connection lines for the master capacitive unit and separate from the connection lines for any other slave capacitive units.

4. The power factor correction system according to any preceding claim, wherein the central control unit is configured to directly control the contactor in each slave capacitive unit.

5. The power factor correction system according to any preceding claim, wherein each contactor is a mechanical contactor.

6. The power factor correction system according to any preceding claim, wherein the master capacitive unit and the one or more slave capacitive units are configured so that they all apply a power factor correction to the same inductive load.

7. The power factor correction system according to any of claims 1 to 5, wherein the power factor correction system is configured to apply a power factor correction to a plurality of separate inductive loads.

8. The power factor correction system according to claim 7, wherein the power factor correction system is configured so that, for at least one inductive load, a plurality of capacitive units are arranged to apply a power factor correction to the inductive load.

9. The power factor correction system according to any preceding claim, wherein the power factor correction system is configured for use in system in which a single three-phase AC electric power supply supplies power to one or more inductive loads.

10. The power factor correction system according to any preceding claim, wherein one or more slave capacitive units are separate modules for retrofitting to an existing power factor correction system.

11. The power factor correction system according to any preceding claim, wherein the power factor correction system is configured for use in system in which each inductive load is a motor arranged to drive the compressor of a cooling system

12. A cooling system arrangement comprising:
the power factor correction system according to any preceding claim; and
one or more motors, wherein each motor is arranged to drive a separate compressor of the cooling system arrangement.
